# FASCICULE DE BREVET EUROPEEN

(11) **EP 0 726 712 B1**
(45) Date de publication et mention de la délivrance du brevet: **03.02.1999**
(21) Numéro de dépôt: 95900184.3
(22) Date de dépôt: 02.11.1994
(51) Int. Cl.: A23C 19/045, A23C 19/028, A01J 25/00, A23C 7/00

(54) **PROCEDE D'ELABORATION DE PRODUITS LAITIERS**
VERFAHREN ZUR HERSTELLUNG VON MOLKEREIPRODUKTEN
METHOD FOR THE PRODUCTION OF DAIRY PRODUCTS

(30) Priorité: 03.11.1993 FR 9313071
(43) Date de publication de la demande: 21.08.1996
(73) Titulaire: CELIA, F-53400 Caron (FR)
(72) Inventeur: DAULOUDET, André, F-53400 Niafles (FR); BRETON, Christian, F-49230 Montfaucon-sur-Moine (FR); SAUVION, Patrick, F-49230 Montigne-sur-Moine (FR); SPIESS, Bernard, F-49230 Montfaucon-sur-Moine (FR)
(74) Mandataire: Armengaud Ainé, Alain
(86) Numéro de dépôt international: FR9401271
(87) Numéro de publication internationale: WO9512321

(56) Documents cités:
- FR-A- 2 218 821
- FR-A- 2 461 461
- GB-A- 2 182 539
- PATENT ABSTRACTS OF JAPAN vol. 12, no. 338 (C-527) (3185) 12 Septembre 1988 & JP,A,63 098 350 (SNOW BRAND MILK PROD CO LTD) 28 Avril 1988

## Description

La présente invention est relative à un procédé de traitement du lait et de sous-produits laitiers. Elle vise plus particulièrement un procédé qui permet d'obtenir, à partir d'un rétentat d'ultrafiltration du lait comprenant éventuellement des agents enzymatiques ou chimiques, mais acidifié par des ferments lactiques thermophiles et/ou mésophiles, le passage d'un état liquide à un état "fromage" solide, manipulable et tranchable, apte à commencer le cycle de saumurage et d'affinage.

Les procédés connus de fabrication d'un fromage mettent en oeuvre une succession d'étapes telles que notamment la formation d'un gel de lait par voie d'acidification lactique et/ou enzymatique, la mise en forme du caillé dans des moules, l'égouttage et/ou le pressage du caillé de manière à favoriser sa cohésion en bloc représentant le gabarit du fromage, l'évacuation du sérum, le démoulage du fromage, puis le salage suivi de la phase d'affinage. Ces procédés sont mis en oeuvre à partir de techniques permettant d'obtenir des préfromages liquides ou des rétentats par ultrafiltration contenant la plus grande partie des protéines de sérum (se reporter au brevet français N° 2 052 121), et ils autorisent des rendements fromagers importants (élaboration d'un rétentat en continu) qui conduisent à des économies de présure. Néanmoins, étant donné que le phénomène de synérèse - qui est une agrégation, au cours du temps, de particules dans un gel - est quasiment absent dans le préfromage liquide, l'emploi de la présure ou d'un agent enzymatique pour la coagulation lactique ou acide n'est pas totalement supprimé, ce qui implique obligatoirement le passage par l'emploi de moules pour y disposer le caillé.

La production de fromages nécessite l'immobilisation d'un grand nombre de moules pendant un laps de temps important, générant par ailleurs des opérations de maintenance, de manutention considérables (démoulage, lavage, pressage ...).

On connaît par ailleurs (cf. brevet allemand N° 2430199 et brevet français N° 2 589 331), des produits obtenus par la mise en oeuvre de procédés basés sur l'application des forces de cisaillement à un rétentat d'ultrafiltration et l'utilisation de la modification de la texture qui en découle. En général, ces procédés de coagulation sont appliqués à des produits liquides, notamment des boissons ou des pâtes fraîches.

La présente invention vise à pallier les inconvénients précédents, en proposant un procédé qui permet d'obtenir à partir d'un rétentat issu d'ultrafiltration, un produit, notamment un fromage, sans obligatoirement nécessiter l'ajout d'un agent de coagulation pour le passage de l'état liquide à l'état solide et donc apte à subir les étapes suivantes d'élaboration du produit fini.

La présente invention se propose particulièrement d'utiliser le phénomène de modification de texture que subit un produit laitier, dans des conditions physico-chimiques données, lorsqu'on lui applique des contraintes de cisaillement. Ainsi, le préfromage liquide passe d'un état liquide à un état solide, tranchable et manipulable.

Avantageusement, le procédé objet de l'invention dispense :
- de mise en contact éventuelle du rétentat liquide avec de la présure pour la formation de caillé ;
- de l'emploi de moules ; et autorise :
- la formation d'un produit fini apte à subir le salage de manière continue et instantanée ;
- l'obtention de fromage de gabarit et de forme variable
- le foisonnnement, et/ou l'addition de marquants ou d'arômes ;
- l'injection de produits de fourrage de manière continue ou discontinue.

A cet effet, le procédé d'élaboration de produits laitiers muni d'au moins une étape d'ultrafiltration et de maturation, se caractérise en ce qu'il comporte au moins une étape de mise sous pression dudit produit en aval d'une étape d'homogénéisation, suivie d'au moins une étape de répartition permettant d'obtenir le passage d'une phase liquide à une phase solide du produit, puis d'au moins une étape d'expansion ou de détente pour le formage, et enfin d'au moins une étape de découpe en portions dudit produit solide.

D'autres caractéristiques et avantages de la présente invention ressortiront de la description faite ci-après, en référence aux dessins annexés qui en illustrent un exemple de réalisation dépourvu de tout caractère limitatif. Sur les figures :

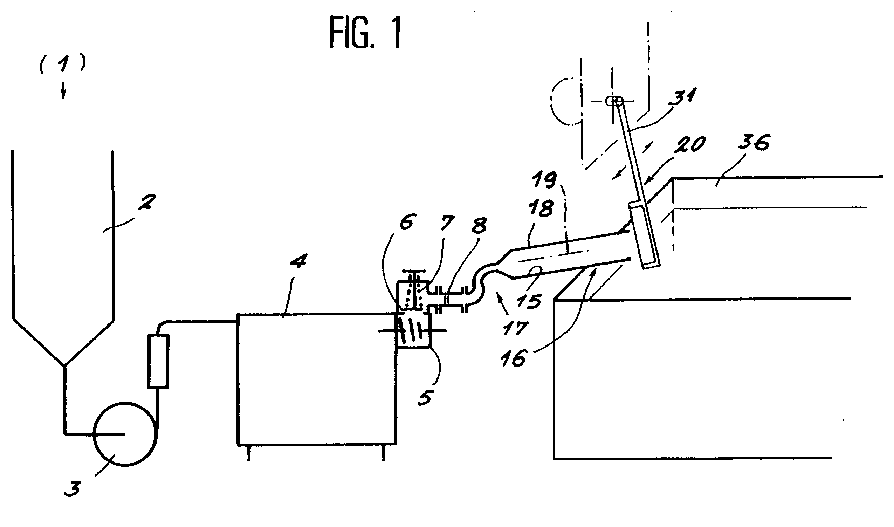

- la figure 1 illustre une installation de mise en oeuvre du procédé selon l'invention comportant principalement une unité de maturation, une unité d'homogénéisation, une unité de durcissement et de mise en forme du gel, une unité de découpe et une unité de salage ;

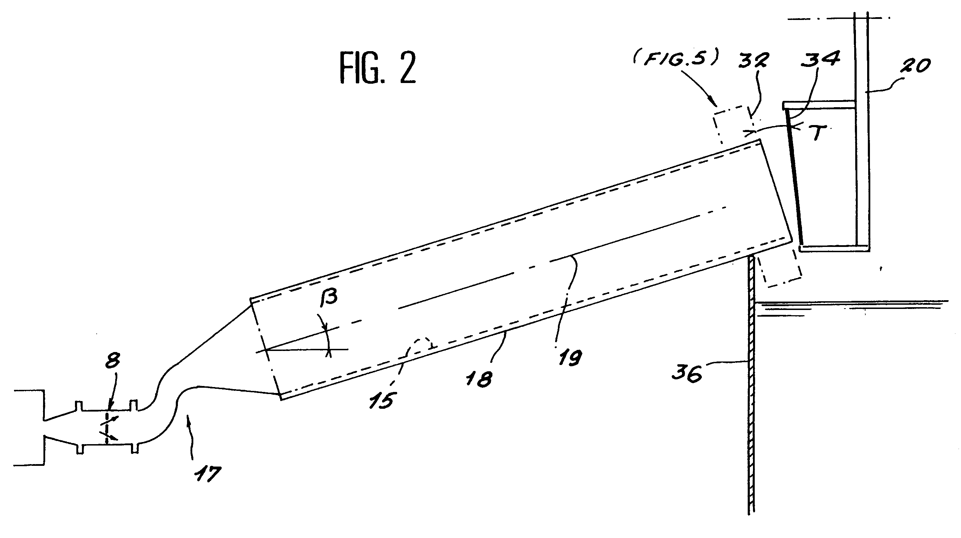

- la figure 2 est une vue plane en coupe de l'unité de durcissement et de mise en forme du gel ;

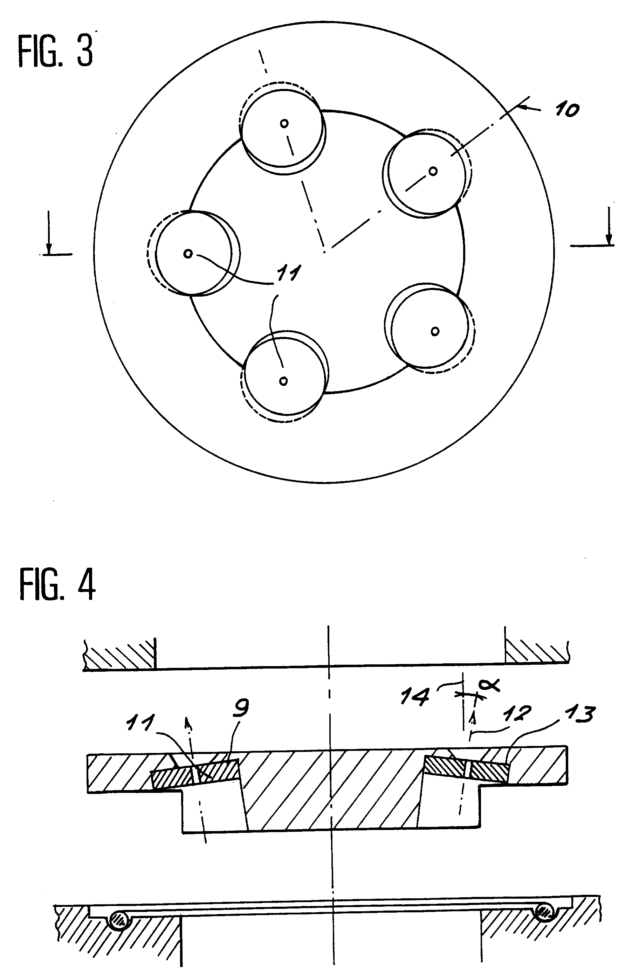

- la figure 3 est une vue plane en coupe, en élévation frontale, de la plaque comportant les buses ou les pastilles qui assurent le changement de phase du produit ;
- la figure 4 est une vue plane, en élévation latérale, de la plaque munie de pastilles ;

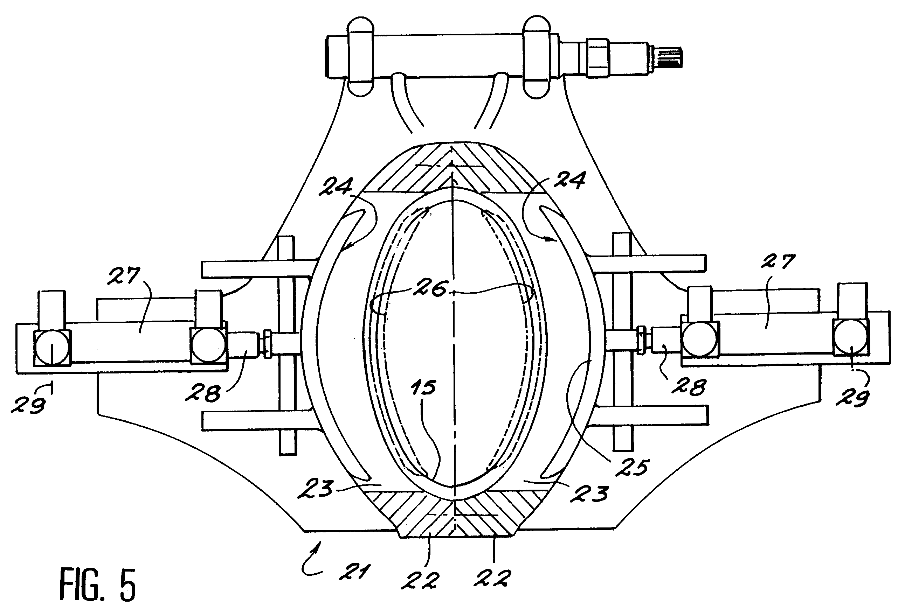

- la figure 5 est une vue plane en coupe, en élévation frontale, de l'unité de préformage munie des mâchoires de marquage ;

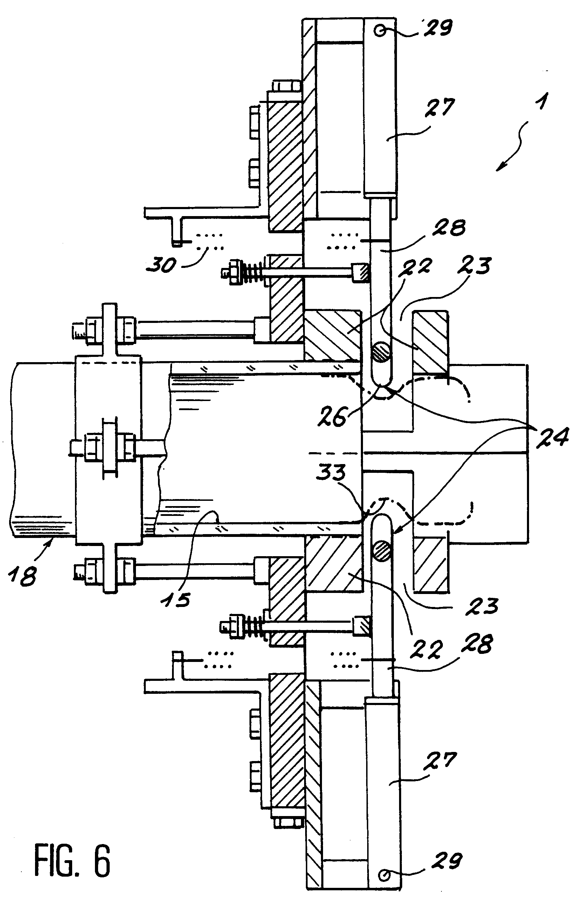

- la figure 6 est une vue de dessus en coupe de l'unité de préformage munie des mâchoires de marquage.

Selon un mode préféré de mise en oeuvre du procédé selon l'invention, il comporte une succession d'étapes qui permet d'obtenir, à partir d'un rétentat liquide issu d'une unité d'ultrafiltration 1, des portions solides de produits, notamment fromagers.

Le rétentat liquide d'ultrafiltration débouche dans un réservoir de maturation 2 au sein duquel il subit éventuellement une acidification par des ferments lactiques thermophiles et/ou mésophiles, puis il est amené dans des conditions physico-chimiques requises, notamment par le choix de conditions de refroidissement et de pH, à des caractéristiques adéquates à son moulage. A titre d'exemple, on cite notamment pour un produit laitier comprenant des ferments lactiques thermophiles, une température de refroidissement très voisine de 45°C mais pas inférieure à 36°C, et une valeur de pH comprise dans la fourchette 5,00 et 5,90.

A la sortie du réservoir de maturation 2, le rétentat liquide est repris par une pompe de gavage 3, en direction d'une unité d'homogénéisation 4, notamment à deux têtes 5, qui élève la pression du produit.

Pendant cette étape d'homogénéisation 4, se situe au moins une étape de mise en pression qui contraint le produit liquide au sein d'au moins un organe déprimogène 6, notamment du style clapet, cet organe étant taré par un système de ressorts réglables 7.

Au sein de l'étape de mise en pression, le rétentat possède une pression moyenne qui avoisine les 300 bars et il traverse un organe 8 réalisé sous la forme d'une plaque, pourvu d'une pluralité d'orifices 9 qui permettent le changement de phase du rétentat ou préfromage liquide en un gel de fromage. La plaque comporte une pluralité d'orifices 9 disposés de manière à conformer des secteurs égaux 10 sur une génératrice (notamment un diamètre) pour une plaque 8 circulaire, lesdits orifices 9 sont comblés par une pluralité de buses 11 ou pastilles, notamment cinq, en carbure de tungstène. On prévoit éventuellement de disposer au niveau de la plaque 8 une pluralité d'orifices permettant le passage de composants divers, ajoutés par pompage, et qui seront entraînés par l'intermédiaire de turbulences dans la pâte du fromage.

Selon une caractéristique avantageuse, l'axe 12 perpendiculaire au plan du siège 13 de chacun des orifices 9 recevant les pastilles 11 est incliné d'un angle α de quelques degrés compris entre 5 et 20° et préférentiellement 13°, par rapport à l'axe de l'orifice 14. Cette disposition permet d'une part, de créer des jets divergents en direction des parois internes 15, et d'autre part de s'assurer que le profil de vitesse du gel de fromage est plat, la forme du profil de vitesse étant déterminante pour la bonne répartition du produit et pour la fermeté désirée du gel de fromage.

En aval de cette étape de transformation, se situe au moins une étape d'expansion 16 ou de détente du gel et de formage en boudin. Ces phases sont réalisées au travers d'une pluralité de coudes 17, dont au moins un diverge et débouche dans une portion tubulaire 18 de sections quelconques. Les parois internes 15 du tube possèdent des propriétés de surface avantageuses, notamment au niveau de leur état de surface, vis-à-vis du gel de fromage en contact ; ainsi, ce tube 18 est réalisé dans une matière plastique du type notamment polyméthyl-méthacrylique (P.M.M.A) dont les propriétés de glissement sont importantes. Par ailleurs, il est avantageux d'incliner de quelques degrés, d'un angle β compris entre 5 et 30°, et préférentiellement 15°, l'axe longitudinal du tube 19 par rapport à l'horizontale. Cette conformation crée, d'une part, une perte de charge suffisante dans le tube pour garantir son remplissage continu, et d'autre part, des conditions qui favorisent le découpage ultérieur du boudin en portions. Le tube d'expansion réalise la transformation du gel en une pâte homogène et consistante dépourvue d'extrait liquide, dont la texture est celle du produit final.

Cette texture a une fermeté à la sortie de la buse qui peut être mesurée par la technique suivante :

Un morceau de fromage est inséré dans un support défini dans la norme DIN 10 331. Une longueur de 25 mm parfaitement plane est présentée sous un fil de diamètre 0,3 mm animé d'une vitesse de descente de 0,1 mm/s. La température de l'échantillon est de 15 °C. La force nécessaire pour assurer la pénétration du fil dans l'éprouvette de fromage est mesurée par un dispositif approprié, la vitesse de pénétration étant constante.

Ainsi, on a relevé pour des fromages obtenus selon le procédé, objet de l'invention, les valeurs suivantes pour la force de pénétration : de 0,2 à 2,2 Newton. Ces valeurs sont à comparer à celles obtenues pour des fromages de type pâte fraîche : 0,04 à 0,1 Newton.

La dernière étape consiste en un découpage du boudin en portions à l'aide de l'action d'au moins un organe tranchant 20, tel que notamment un fil métallique ou plastique, combinée à celle d'au moins un organe de formage 21 et de marquage. A la sortie du tube, le boudin de pâte de fromage qui sort en permanence par l'action continue des moyens de mise en pression 4, chemine au travers d'un organe de formage 21, pourvu de coquilles 22 dont le profil est choisi de manière à maintenir la conformation du boudin dans le gabarit déterminé par l'utilisateur. Ainsi, pour obtenir des portions ovales, les coquilles 22 dans leur zone de contact avec le boudin comportent notamment un profil concave.

Selon un autre mode de réalisation, les coquilles 22 sont de profils rectilignes pour un boudin comportant des parois planes.

Au sein de ces coquilles 22, est disposé, dans des cavités 23, une pluralité de mâchoires 24 portant une protubérance 25 de profil analogue à la forme de la coquille 22 et faisant saillie en direction du boudin, destinée à imprimer une empreinte 26 en creux dans le produit en circulation.

Ces mâchoires 24 sont actionnées en translation en direction des parois du boudin, par une pluralité de moyens de manoeuvre 27 tels que des vérins pneumatiques. Chacun des vérins possède un point d'ancrage 29 avec le bâti fixe de la machine, chacune des extrémités libres de la tige du vérin 28 est solidaire des mâchoires 24 respectives. Le point d'articulation 29, notamment du type rotule, autorise la combinaison de mouvements axial et radial des mâchoires 24, lorsque ces dernières enserrent les parois du boudin.

La cinématique des mâchoires 24 se décompose de la manière suivante :
- une translation radiale vers les parois du boudin, jusqu'à marquer d'une empreinte en creux le produit en circulation ;
- le boudin ne cessant d'avancer vers la sortie des coquilles 22, il entraîne en translation axiale les mâchoires 24 ;
- libération des mâchoires 24 et retour, notamment par un système de ressort de rappel 30, dans leur plan d'origine pour un autre cycle, le mouvement ainsi créé s'apparente à un pas de pélerin.

L'organe tranchant 20 tel que notamment un fil métallique tendu sur un bras oscillant 31, balaye dans un mouvement de va-et-vient permanent, selon une cadence déterminée par l'utilisateur et en phase avec la cinématique des mâchoires 24, la paroi frontale 32 des coquilles 22 au niveau de la zone médiane 33 laissée par l'empreinte 26 de chacune des mâchoires 24.

Selon une autre caractéristique de l'invention, le plan de coupe 34 est incliné d'un angle τ de quelques degrés par rapport au plan de sortie 32, compris entre 5 et 20° et préférentiellement 8 à 12° afin de compenser, la flexion du gel qui ne se trouve plus soutenu par le tube, la composition en extrait sec du rétentat.

Le procédé objet de l'invention est avantageusement commandé par un système 35 de contrôle automatique (non représenté sur les figures) à base d'ordinateurs et d'automates programmables, afin d'être apte à asservir, au niveau des temps machine, le mouvement de l'organe tranchant

20. Selon un mode de mise en oeuvre de ce procédé, ce dernier permet l'apparition, dans le rétentat liquide, d'un foisonnement par incorporation d'un fluide gazeux notamment du gaz carbonique ou de l'azote. On peut également inclure dans le préfromage liquide ou dans le gel, un agent de saveur, de texture, ou de fourrage, éventuellement d'origine non laitière, la répartition des produits incorporés ayant lieu de manière homogène et uniforme.

Le procédé, objet de l'invention, garantit par ailleurs que la majeure partie du concentré liquide issu de l'unité d'ultrafiltration 1 se transforme, après son passage au travers de la plaque 8 munie des buses 11 ou pastilles, en un caillé de texture allant d'un état pâteux à un état ferme proche de la pâte, dont les caractéristiques répondent par exemple à la norme DIN 10 331, en fonction des paramètres de fonctionnement. Par ailleurs, il n'y a pas dans ce procédé, d'exsudation de sérum, d'où une amélioration non négligeable du rendement par rétention de la quasi totalité des protéines solubles dans le caillé.

On note également, comme avantage important, l'absence totale d'égouttage après tranchage, engendrant une diminution de la perte de matière au niveau des produits coupés.

Compte tenu de l'interchangeabilité du tube de formage 21 et des coquilles 22, il est possible de changer, dans un laps de temps très réduit, les caractéristiques de forme, de masse, de composition, de consistance..... des produits issus de ce procédé de fabrication, et d'augmenter les quantités produites par une multiplication d'installations mettant en oeuvre le procédé en aval d'une unité d'ultrafiltration 1 et en amont d'une unité de salage 36.

Ainsi, selon un autre mode de mise en oeuvre du procédé, objet de l'invention, le tube de formage 21 est allongé et équipé d'une double paroi permettant le passage d'un fluide caloporteur, assurant le chauffage ou le refroidissement de la pâte.

Etant donné qu'il n'est pas non plus indispensable d'incorporer de la présure dans le rétentat ou le préfromage liquide pour sa coagulation, on ne risque plus d'observer de phénomène de "graissage" de la croûte, phénomène pratiquement toujours observé dans le cas de coagulation d'un concentré ultrafiltré comportant de la présure.

Il demeure bien entendu que la présente invention n'est pas limitée aux exemples de réalisation décrits et représentés ci-dessus, mais qu'elle en englobe toutes les variantes.

## Revendications

1. Procédé d'élaboration de produits laitiers muni d'au moins une étape d'ultrafiltration (1) et de maturation (2), caractérisé en ce qu'il comporte au moins une étape de mise sous pression dudit produit, en aval d'une étape d'homogénéisation (4), suivie d'au moins une étape de répartition permettant d'obtenir le passage d'une phase liquide à une phase solide du produit, puis d'au moins une étape d'expansion (16) ou de détente pour le formage, et enfin d'au moins une étape de découpe en portions dudit produit solide.

2. Procédé d'élaboration de produits laitiers selon la revendication précédente, caractérisé en ce qu'il autorise l'apparition, dans le rétentat liquide, d'un foisonnement par incorporation d'un fluide gazeux notamment du gaz carbonique ou de l'azote.

3. Procédé d'élaboration de produits laitiers selon l'une des revendications 1 ou 2, caractérisé en ce l'on inclut dans le préfromage liquide ou dans le gel, un agent de saveur, de texture, ou de fourrage, éventuellement d'origine non laitière, la répartition des produits incorporés ayant lieu de manière homogène et uniforme.

4. Procédé d'élaboration de produits laitiers selon l'une quelconque des revendications précédentes, caractérisé en ce que l'étape de découpage du boudin en portions a lieu par l'action d'au moins un organe tranchant (20) combinée à celle d'au moins un organe de formage (18, 21) et de marquage.

5. Procédé d'élaboration de produits laitiers selon la revendication 4, caractérisé en ce qu'il est avantageusement commandé par un système (35) de contrôle automatique à base d'ordinateurs et d'automates programmables, afin d'être apte à asservir, au niveau des temps machine, le mouvement de l'organe tranchant (20) et une mâchoire (24).

6. Installation pour la mise en oeuvre du procédé selon l'une quelconque des revendications 1 à 5, caractérisée en ce que pour effectuer le passage de la phase liquide à la phase solide, le rétentat ou préfromage liquide traverse au moins un organe (8) réalisé sous la forme d'une plaque, pourvu d'une pluralité d'orifices (9).

7. Installation selon la revendication 6, caractérisée en ce qu'en aval de l'unité d'homogénéisation se situe au moins une unité de mise en pression, réalisée par un homogénéisateur (4) qui contraint le produit liquide au sein d'au moins un organe déprimogène (6), notamment du style clapet, cet organe étant taré par un système de ressorts réglables (7).

8. Installation selon l'une des revendications 6 ou 7, caractérisée en ce que les orifices (9) de l'organe (8) sont comblés par une pluralité de buses (11) ou pastilles, notamment cinq, en carbure de tungstène.

9. Installation selon la revendication 8, caractérisée en ce que l'organe (8) comporte une pluralité d'orifices permettant le passage de composants divers, ajoutés par pompage, et qui sont entraînés par l'intermédiaire de turbulences dans la pâte du fromage.

10. Installation selon la revendication 8, caractérisée en ce que l'axe (12) perpendiculaire au plan du siège (13) de chacun des orifices (9) recevant les pastilles (11) est incliné d'un angle α de quelques degrés compris entre 5 et 20° et préférentiellement 13°, par rapport à l'axe de l'orifice (14).

11. Installation selon l'une quelconque des revendications 6 à 10, caractérisée en ce qu'elle comporte pour la phase d'expansion, une pluralité de coudes (17), dont au moins un diverge et débouche dans une portion tubulaire ou tube (18) de sections quelconques.

12. Installation selon la revendication 11, caractérisée en ce que les parois internes (15) du tube possèdent des propriétés de surface avantageuses, notamment au niveau de leur état de surface, vis-à-vis du gel de fromage en contact, ledit tube (18) étant réalisé dans une matière plastique du type notamment polyméthyl-méthacrylique (P.M.M.A).

13. Installation selon l'une des revendications 11 ou 12, caractérisée en ce que le tube de formage (21) est allongé et équipé d'une double paroi permettant le passage d'un fluide caloporteur, assurant le chauffage ou le refroidissement de la pâte.

14. Installation selon l'une quelconque des revendications 11 à 13, caractérisée en ce que l'on incline de quelques degrés, d'un angle β compris entre 5 et 30°, et préférentiellement 15°, l'axe longitudinal (19) du tube (18) par rapport à l'horizontale.

15. Installation selon l'une quelconque des revendications 6 à 14, caractérisée en ce que l'organe de formage (18, 21) est pourvu de coquilles (22) dont le profil est choisi de manière à maintenir la conformation du boudin dans le gabarit déterminé par l'utilisateur.

16. Installation selon la revendication 15, caractérisée en ce que les coquilles (22) sont munies, dans des cavités (23), d'une pluralité de mâchoires (24) portant une protubérance (25) de profil analogue à la forme de la coquille (22) et faisant saillie en direction du boudin, destinée à imprimer une empreinte (26) dans le produit en circulation.

17. Installation selon la revendication 16, caractérisée en ce que les mâchoires (24) sont actionnées en translation en direction des parois du boudin, par une pluralité de moyens de manoeuvre (27) tels que des vérins pneumatiques.

18. Installation selon la revendication 17, caractérisée en ce que les extrémités libres de la tige du moyen de manoeuvre (28) coopèrent avec un point d'articulation (29) sur les mâchoires (24) respectives, le point d'articulation (29), notamment du type rotule, autorisant la combinaison de mouvements axial et radial des mâchoires (24), lorsque ces dernières enserrent les parois du boudin.

19. Installation selon l'une quelconque des revendications 15 à 18, caractérisée en ce que l'organe tranchant (20) tel que notamment un fil métallique ou plastique tendu sur un bras oscillant (31), balaye dans un mouvement de va-et-vient permanent, selon une cadence déterminée par l'utilisateur et en phase avec la cinématique des mâchoires (24), la paroi frontale (32) des coquilles (22) au niveau de la zone médiane (33) laissée par l'empreinte (26) de chacune des mâchoires (24).

20. Installation selon la revendication 19, caractérisée en ce que le plan de coupe (34) est incliné d'un angle τ de quelques degrés par rapport au plan de sortie (32), compris entre 5 et 20° et préférentiellement 8 à 12°.

## Claims

1. Process for the production or dairy products comprising at least one ultrafiltration (1) and maturation (2) stage, characterized in that it comprises at least one stage for placing the said product under pressure downstream of a homogenization stage (4), followed by at least one distribution stage which makes it possible to obtain the passage of the product from a liquid phase to a solid phase, and then at least one expansion (16) or decompression stage for the forming, and finally, at least one stage for cutting the said solid product into portions.

2. Process for the production of dairy products according to the preceding claim, characterized in that it allows the appearance, in the liquid retentate, of an overrun by incorporation of a gaseous fluid, especially carbon dioxide or nitrogen.

3. Process for the production of dairy products according to either of Claims 1 and 2, characterized in that a taste-enhancing, texturing or filling agent, optionally of non-dairy origin, is incorporated into the liquid precheese or into the gel, the distribution of the incorporated products taking place homogeneously and uniformly.

4. Process for the production of dairy products according to any one of the preceding claims, characterized in that the stage for cutting the roll into portions is caused by the action of at least one slicing component (20) combined with that of at least one forming component (18, 21) and marking component.

5. Process for the production of dairy products according to Claim 4, characterized in that it is advantageously controlled by an automatic control system (35) based on computers and programmable logic units, in order to be able to control automatically, at the level of the machine running times, the movement of the slicing component (20) and a jaw (24).

6. Plant for the implementation of the process according to any one of Claims 1 to 5, characterized in that in order to achieve the passage from the liquid phase to the solid phase, the retentate or liquid precheese passes through at least one component (8) made in the form of a plate, provided with a plurality of orifices (9).

7. Plant according to Claim 6, characterized in that downstream of the homogenization unit, there is at least one pressurizing unit, achieved by a homogenizer (4) which forces the liquid product into at least one decompressing component (6), especially of the valve type, this component being adjusted by a system of adjustable springs (7).

8. Plant according to either of Claims 6 and 7, characterized in that the orifices (9) of the component (8) are filled with a plurality of nozzles (11) or pellets, especially five, made of tungsten carbide.

9. Plant according to Claim 8, characterized in that the component (8) comprises a plurality of orifices allowing the passage of various components, added by pumping, and which are carried by turbulence into the cheese paste.

10. Plant according to Claim 8, characterized in that the axis (12) which is perpendicular to the plane of the seat (13) of each of the orifices (9) receiving the pellets (11) is inclined by an angle α of a few degrees, between 5 and 20°, and preferably 13°, relative to the axis of the orifice (14).

11. Plant according to any one of Claims 6 to 10, characterized in that it comprises, for the expansion phase, a plurality of bends (17), of which at least one diverges and enters into a tubular or tube portion (18) having sections of any type.

12. Plant according to Claim 11, characterized in that the inner walls (15) of the tube possess advantageous surface properties, especially at the level of their surface state, with respect to the cheese gel which is in contact, the said tube (18) being made from a plastic material especially of the polymethyl-methacrylic (P.M.M.A) type.

13. Plant according to either of Claims 11 and 12, characterized in that the forming tube (21) is elongated and equipped with a jacket allowing the passage of a liquid coolant, ensuring the heating or cooling or the paste.

14. Plant according to any one of Claims 11 to 13, characterized in that the longitudinal axis (19) of the tube (18) is inclined by a few degrees, by an angle β of between 5 and 30°, and preferably 15°, relative to the horizontal.

15. Plant according to any one of Claims 6 to 14, characterized in that the forming component (18, 21) is provided with shells (22) whose shape is chosen so as to maintain the conformation of the roll in the size determined by the user.

16. Plant according to Claim 15, characterized in that the shells (22) are provided, in cavities (23), with a plurality of jaws (24) carrying a protuberance (25) whose shape is similar to the shape of the shell (22) and projecting in the direction of the roll, intended to make an imprint (26) in the circulating product.

17. Plant according to Claim 16, characterized in that the jaws (24) are actuated translationally in the direction of the walls of the roll, by a plurality of operating means (27) such as pneumatic jacks.

18. Plant according to Claim 17, characterized in that the free ends of the rod of the operating means (28) cooperate with a hinge point (29) on the respective jaws (24), the hinge point (29), especially of the ball-and-socket type, by meeting the combination of axial and radial movements of the jaws (24), when the latter grip the walls of the roll.

19. Plant according to any one of Claims 15 to 18, characterized in that the slicing component (20), such as especially a wire or a plastic string tied to an oscillating arm (31), sweeps in a continuous reciprocating movement, at a race determined by the user and in phase with the kinematics of the jaws (24), the front wall (32) of the shells (22) at the level of the median zone (33) left by the imprint (26) of each of the jaws (24).

20. Plant according to Claim 19, characterized in that the sectional plane (34) is inclined by an angle τ of a few degrees relative to the outlet plane (32), between 5 and 20°, and preferably 8 to 12°.

## Patentansprüche

1. Verfahren zur Verarbeitung von Milchprodukten, das mindestens eine Ultrafiltrationsstufe (1) und eine Reifungsstufe (2) aufweist,
dadurch **gekennzeichnet**,
daß es nach einer Homogenisierungsstufe (4) mindestens eine Stufe der Druckbeaufschlagung des Produktes aufweist, der mindestens eine Verteilungsstufe, die den Übergang des Produktes von einer flüssigen Phase in eine feste Phase gewährleistet, dann mindesten eine Stufe (16) der Expansions oder Entspannung des Käses und schließlich eine Stufe des Schneidens des festen Produkts in Portionen folgt.

2. Verfahren zur Verarbeitung von Milchprodukten nach dem vorhergehenden Anspruch,
dadurch **gekennzeichnet**,
daß durch Zuführen eines gasförmigen Fluids, insbesondere von Kohlendioxid oder Stickstoff, das Aufquellen in dem flüssigen Retentat ermöglicht wird.

3. Verfahren zur Verarbeitung von Milchprodukten nach einem der Ansprüche 1 oder 2,
dadurch **gekennzeichnet**,
daß man dem flüssigen Vorkäse oder Gel ein eventuell nicht aus Milch gewonnenes Würz-, Textur- oder Quellmittel zugibt, wobei die Verteilung der zugeführten Produkte auf homogene und einheitliche Weise erfolgt.

4. Verfahren zur Verarbeitung von Milchprodukten nach einem der vorhergehenden Ansprüche,
dadurch **gekennzeichnet**,
daß die Stufe des Schneidens des Strangs in Portionen durch die Einwirkung mindestens einer Schneideeinrichtung (20) erfolgt, mit der mindestens eine Form- und eine Markierungseinrichtung (18, 21) verbunden ist.

5. Verfahren zur Verarbeitung von Milchprodukten nach Anspruch 4,
dadurch **gekennzeichnet**,
daß es vorteilhaft durch ein automatisches Regelsystem (35) auf der Basis von Rechnern und programmierbaren Automaten gesteuert wird, damit die Bewegung der Schneideeinrichtung (20) und eine Preßbacke (24) bezüglich der Maschinenzeiten regelbar sind.

6. Vorrichtung zur Durchführung des Verfahrens nach einem der Ansprüche 1 bis 5,
dadurch **gekennzeichnet**,
daß zur Durchführung des Übergangs von der flüssigen Phase zur festen Phase das flüssige Retentat bzw. der flüssige Vorkäse mindestens eine Einrichtung (8) durchquert, die in Form einer mit einer Viehlzahl von Öffnungen versehenen Platte ausgebildet ist.

7. Vorrichtung nach Anspruch 6,
dadurch **gekennzeichnet**,
daß nach der Baueinheit zur Homogenisierung eine Baueinheit zur Druckbeaufschlagung angeordnet ist, die durch einen Homogenisator (4) erfolgt, der das flüssige Produkt im Inneren mindestens einer unter Druck stehenden Einrichtung (6), insbesondere nach Art eines Ventils, zusammenpreßt, wobei diese Einrichtung durch ein System von regulierbaren Federn (7) tariert ist.

8. Vorrichtung nach Anspruch 6 oder 7,
dadurch **gekennzeichnet**,
daß die Öffnungen (9) der Einrichtung (8) von einer Vielzahl, insbesondere von fünf Düsen (11) oder Plättchen bzw. Verschlußscheiben aus Wolframkarbid ausgefüllt sind.

9. Vorrichtung nach Anspruch 8,
dadurch **gekennzeichnet**,
daß die Einrichtung (8) eine Vielzahl von Öffnungen für den Durchgang von verschiedensten, durch Pumpen beigegebenen Bestandteilen aufweist, die durch Turbulenzen in die Käsepaste hineingezogen werden.

10. Vorrichtung nach Anspruch 8,
dadurch **gekennzeichnet**,
daß die Achse (12), die senkrecht zur Ebene des Düsenhalters (13) jeder der die Verschlußscheiben (11) aufnehmenden Öffnungen (9) steht, um einen Winkel α von einigen Grad, der zwischen 5° und 20° und bevorzugt 13° beträgt, bezüglich der Achse (14) der Öffnungen geneigt ist.

11. Vorrichtung nach einem der Ansprüche 6 bis 10,
dadurch **gekennzeichnet**,
daß sie für die Expansionsphase eine Vielzahl von Krümmern (17) aufweist, von denen zumindest einer divergent ausgebildet ist und in einen rohrförmigen Abschnitt oder ein Rohr (18) beliebigen Querschnitts mündet.

12. Vorrichtung nach Anspruch 11,
dadurch **gekennzeichnet**,
daß die Innenwände (15) des Rohrs in Bezug auf das mit ihnen in Kontakt stehenden Käsegel vorteilhafte Oberflächeneigenschaften, insbesondere bezüglich des Oberflächenzustands, aufweisen, wobei das Rohr (18) aus einem Kunststoff nach Art von insbesondere Polymethyl-methacrylat (P.M.M.A) hergestellt ist.

13. Vorrichtung nach Anspruch 11 oder 12,
dadurch **gekennzeichnet**,
daß das Formrohr (21) langgestreckt ausgebildet und mit einer Doppelwand zum Durchgang eines Wärmeaustauschmediums versehen ist, das das Erhitzen oder das Kühlen der Paste gewährleistet.

14. Vorrichtung nach einem der Ansprüche 11 bis 13,
dadurch **gekennzeichnet**,
daß die Längsachse (19) des Rohrs (18) um einige Grad, um einen Winkel β zwischen 5° und 30° und vorzugsweise von 15°, bezüglich der Horizontalen geneigt ist.

15. Vorrichtung nach einem der Ansprüche 6 bis 14,
dadurch **gekennzeichnet**,
daß die Formeinrichtung (18, 21) mit Schalen (22) versehen ist, deren Umriß derart gewählt ist, daß die Formgebung des Strangs innerhalb der vom Benutzer bestimmten Modellvorgabe gehalten wird.

16. Vorrichtung nach Anspruch 15,
dadurch **gekennzeichnet**,
daß die Schalen (22) in Hohlräumen (23) mit einer Vielzahl von Preßbacken (24) zum Aufbringen eines Eindrucks (26) in das umlaufende Produkt versehen sind, die eine in Richtung des Stranges vorspringende Ausstülpung (25) mit zur Form der Schale (22) analogem Profil aufweisen.

17. Vorrichtung nach Anspruch 16,
dadurch **gekennzeichnet**,
daß die Preßbacken (24) durch eine Vielzahl von Betätigungsmitteln (27), wie pneumatische Zylinder, in eine translatorische Bewegung in Richtung der Strangwände versetzbar sind.

18. Vorrichtung nach Anspruch 17,
dadurch **gekennzeichnet**,
daß die freien Enden der Stange des Betätigungsmittels (28) jeweils mit einem Gelenk (29) auf den Preßbacken (24) zusammenwirken, und daß das Gelenk (29), das insbesondere nach Art eines Knochengelenks ausgebildet ist, die Kombination aus Axial- und Radialbewegungen der Preßbacken (24) gewährleistet, wenn letztere die Strangwände umschließen.

19. Vorrichtung nach einem der Ansprüche 15 bis 18,
dadurch **gekennzeichnet**,
daß die Schneideeinrichtung (20), wie insbesondere ein auf einem Schwenkarm (31) gehalterter Metall- oder Kunststoffdraht, in einer ständigen Hin- und Herbewegung gemäß einem vom Benutzer bestimmten Takt und in Phase mit der Kinematik der Preßbacken (24) die Stirnwand (32) der Schalen (22) auf Höhe des Mittelbereichs (33) überstreicht, den der Eindruck (26) jeder der Preßbacken (24) hinterlassen hat.

20. Vorrichtung nach Anspruch 19,
dadurch **gekennzeichnet**,
daß die Schnittebene (34) um einen Winkel τ, der zwischen 5° und 20° und bevorzugt 8° bis 12° beträgt, bezüglich der Austrittsebene (32) geneigt ist.
